**Europäisches Patentamt**

**European Patent Office**

**Office européen des brevets**

(19)

(11) **EP 1 164 096 A1**

(12) ## DEMANDE DE BREVET EUROPEEN

(43) Date de publication:
**19.12.2001 Bulletin 2001/51**

(51) Int Cl.⁷: **B65G 47/08**, B65G 47/68, B65G 47/70

(21) Numéro de dépôt: **00500091.4**

(22) Date de dépôt: **16.05.2000**

(84) Etats contractants désignés:
**AT BE CH CY DE DK ES FI FR GB GR IE IT LI LU MC NL PT SE**
Etats d'extension désignés:
**AL LT LV MK RO SI**

(71) Demandeurs:
• **Vidrala, S.A.**
  **01400 Llodio, (Alava) (ES)**
• **Avacon, S.A.**
  **01400 Llodio (Alava) (ES)**

(72) Inventeurs:
• **Dutto Fantino, Ivo**
  **01400 Llodio, (Alava) (ES)**
• **Arechaga Camara, Alfonso**
  **01400 Llodio, (Alava) (ES)**
• **Aragon Lopez, Antonio**
  **01400 Llodio, (Alava) (ES)**

(74) Mandataire: **Urizar Barandiaran, Miguel Angel**
  **Gordoniz, 22-5 P.O.Box 6454**
  **48012 Bilbao (Vizcaya) (ES)**

(54) **Système de distribution d'emballages pour un palettiseur**

(57)     Système de distribution d'emballages pour un palettiseur, qui se compose de "n" lignes d'arrivée des emballages de production et de lignes de sortie des emballages pour le palettiseur, et qui dispose sur chaque ligne d'arrivée d'un dispositif de comptage des emballages associé à des moyens permettant la distribution d'emballages de chaque ligne d'arrivée à "m/n" lignes de sortie et chaque ligne de sortie comportant une zone de transport rapide et d'une zone de transport lent des emballages, et comportant, à sa sortie, un dispositif de passage/non passage et comptage des emballages; un microprocesseur programmé, qui contrôle le système et fournit à chaque ligne de sortie les emballages conformément aux nécessités du palettiseur.

Applicable à la fabrication d'emballages en verre.

Fig. 1

EP 1 164 096 A1

**Description**

Dans les usines d'emballages et, plus concrètement, d'emballages en verre, une fois l'emballage fabriqué, il faut le palettiser.

Des lignes de production jusqu'au stacker du palettiseur, apparaissent les problèmes suivants:

- Perte de temps dans le transport des emballages.
- Engorgements sur les lignes d'entrée au palettiseur.
- Entassement des emballages sur certaines lignes et manque d'emballages sur d'autres, avec des pertes de temps dans la palettisation.
- Lignes avec des emballages ayant une distribution inégale.

Le demandeur n'a trouvé aucun antécédent qui traite d'un système, machine ou procédure sur ce problème, qui a été résolu par l'objet de cette demande qui est basée sur la distribution, conformément aux nécessités du palettiseur, des emballages sur les lignes d'alimentation du palettiseur, en comptant les emballages qui entrent et qui sortent de ces lignes d'alimentation.

La présente invention préconise un système de distribution des emballages pour un palettiseur se composant de "n" lignes d'arrivée des emballages de production et de lignes de "m" sorties des emballages pour le palettiseur, qui disposerait

a) sur chaque ligne d'arrivée, d'un dispositif de comptage des emballages, associé à des moyens pour la distribution des emballages de chaque ligne d'arrivée à "m/n" lignes de sortie, et
b) chaque ligne de sortie comportant une zone de transport rapide et une zone de transport lent des emballages, et disposant à sa sortie d'un dispositif de passage/non passage et de comptage des emballages,
c) d'un microprocesseur programmé qui contrôle le système et fournit à chaque ligne de sortie les emballages conformément aux besoins du palettiseur.

Pour mieux comprendre l'objet de la présente invention, une forme préférentielle de réalisation pratique est représentée, susceptible de changments accessoires n'en dénaturant pas le fondement.

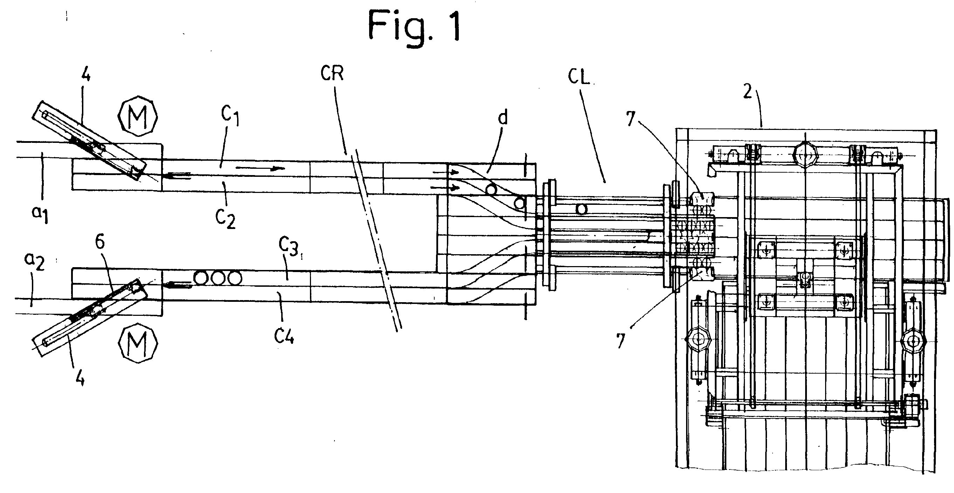

La figure 1 est une vue schématique d'une réalisation pratique du système qui fait l'objet de l'invention.

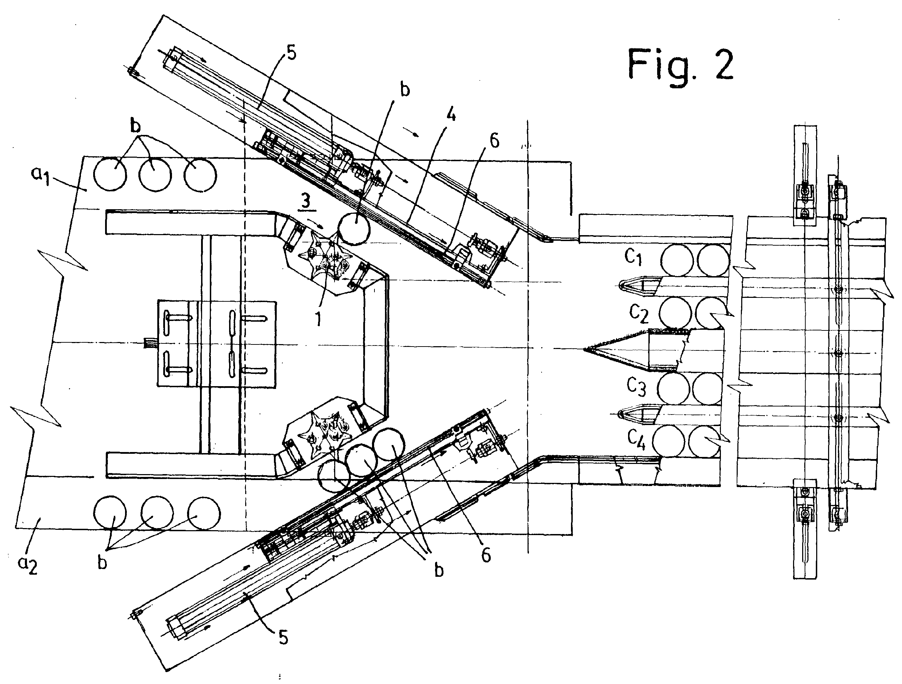

La figure 2 est une vue amplifiée de l'embranchement des lignes d'arrivée et de sortie de la figure 1.

Un exemple de réalisation pratique, non limitative, de la présente invention est décrit ci-dessous.

"n" lignes d'arrivée $(a_1)$, $(a_2)$ arrivent de production avec les emballages (b) correspondants.

Pour le système, il faut compter le nombre d'emballages (b) qui y arrive, et pour cela, on dispose à l'entrée du système ou, ce qui revient au même, à la sortie de chaque ligne d'arrivée $(a_1)$, $(a_2)$ de production, un dispositif de comptage et qui sera, de préférence aussi, de passage/non passage, par exemple une étoile qui, avec ses pointes, permettra/empêchera le passage de l'emballage (b) par le canal (3) formé entre elle et un dispositif de distribution (4).

En aval, le stacker (2) (dans le langage technique, on appelle stacker un dispositif formant des couches d'emballages pour les emporter jusqu'aux palettes) forme des couches de "m" lignes d'emballages (sur les figures, 4 lignes), d'où la nécessité pour le système de transformer les "n" lignes d'arrivée $(a_1)$, $(a_2)$ en "m" lignes $(C_1)$, $(C_2)$, $(C_3)$, $(C_4)$ de sortie vers la palettiseur formé par le stacker et d'autres dispositifs.

Pour cela, étant associé à chaque dispositif de comptage (1), on installe un dispositif de distribution (4) qui se compose d'un cylindre d'actionnement (5) dont la tige est unie à une glissière de distribution (6), de sorte que les emballages (b) de chaque ligne d'arrivée, par exemple $(a_1)$, une fois qu'ils ont dépassé l'étoile-dispositif de comptage (1), se dirigent vers une ligne concrète de sortie, par exemple $(C_2)$ (comme sur la figure), en fonction de l'extension de la glissière de distribution (6).

Le fait de disposer d'autres moyens de déviation déjà connus et conventionnels entre dans l'objet de l'invention.

De cette façon, avec les ordres d'un microprocesseur régulateur du système, on contrôle l'extension de la glissière de distribution (6) et les emballages sont envoyés à chaque ligne de sortie $(C_1)$, $(C_2)$, $(C_3)$, $(C_4)$, en fonction des besoins, en aval, du stacker (2).

Le problème qui se pose au système, en ce point, est qu'il a besoin de transporter rapidement les emballages jusqu'au palettiseur, mais en évitant des chocs qui seraient à l'origine de ruptures des emballages, de chutes par ricochet, d'efforts excessifs dans les systèmes de comptage et passage/non passage qui pourraient provoquer des pannes ou des erreurs dans le comptage.

Pour le résoudre, le système dispose que les lignes de sortie $(C_1)$, $(C_2)$, $(C_3)$, $(C_4)$ soient constituées par un tronçon (CR) de transport rapide et un tronçon (CL) de transport lent qui débouche sur le stacker (2), le tronçon de transport rapide (CR) étant, approximativement, de deux à quatre fois supérieur au tronçon de transport lent (CL):

$$2\ CL \leq CR \leq 4\ CL$$

Entre les deux tronçons (CR), (CL), on a disposé une zone de ralentissement formée par des déviateurs (d) qui changent la direction du courant des emballages (b) du tronçon rapide (CR) au tronçon lent (CL).

À la sortie du tronçon de transport lent (CL), on dispose sur chaque ligne $(C_1)$, $(C_2)$, $(C_3)$, $(C_4)$ un dispositif de passage/non passage et de comptage des emballages (b), par exemple une étoile similaire à l'étoile (1) utilisée à la sortie des lignes d'arrivée $(a_1)$, $(a_2)$.

On dispose du microprocesseur correspondant qui reçoit l'information et commande les éléments du système décrits jusqu'ici, en évitant les engorgements à l'entrée du stacker et en fournissant à chaque ligne de sortie $(C_1)$, $(C_2)$, $(C_3)$, $(C_4)$, qui sont celles d'alimentation du stacker, les emballages qu'il faut pour compléter les couches.

La CPU sait, à tout moment, la quantité de bouteilles disponible sur chaque ligne, aussi bien à l'entrée qu'à la sortie, c'est pourquoi, conformément à son programme, elle réussit à optimiser le travail et à éviter les temps morts du palettiseur.

**Revendications**

1. Système de distribution d'emballages pour un palettiseur se caractérisant par le fait qu'il se compose de "n" lignes d'arrivée des emballages de production et de lignes de sortie des emballages pour le palettiseur et disposant:

   a) sur chaque ligne d'arrivée, d'un dispositif de comptage des emballages associé à des moyens pour la distribution d'emballages de chaque ligne d'arrivée à "m/n" lignes de sortie et

   b) chaque ligne de sortie comportant une zone de transport rapide et une zone de transport lent des emballages et disposant, à la sortie, d'un dispositif de passage/non passage et de comptage des emballages.

   c) d'un microprocesseur programmé, qui contrôle le système et fournit à chaque ligne de sortie les emballages conformément aux nécessités du palettiseur.

2. Système de distribution d'emballages pour un palettiseur, selon la revendication précédente, se caractérisant par le fait que, sur chaque ligne de sortie, on dispose une zone de relentissement entre la zone de transport rapide et la zone de transport lent.

3. Système de distribution d'emballages pour un palettiseur, selon la première revendication, se caractérisant par le fait que les moyens permettant la distribution d'emballages comportent un cylindre d'actionnement à la tige duquel est unie une glissière de distribution dont l'extrémité est raccordée à l'une ou l'autre des lignes d'arrivée.

4. Système de distribution d'emballages pour un palettiseur, selon la première revendication, se caractérisant par le fait que la zone de transport rapide est approximativement de deux à quatre fois supérieure à la zone de transport lent.

# Fig. 1

EP 1 164 096 A1

Fig. 2

# EP 1 164 096 A1

| Office européen des brevets | RAPPORT DE RECHERCHE EUROPEENNE | Numéro de la demande |
| --- | --- | --- |
| | | EP 00 50 0091 |

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
| --- | --- | --- | --- |
| X | GB 1 594 810 A (STORK BEPAK BV) 5 août 1981 (1981-08-05) * le document en entier * --- | 1,3,4 | B65G47/08 B65G47/68 B65G47/70 |
| X | FR 2 667 851 A (GEBO IND) 17 avril 1992 (1992-04-17) * revendication 3; figure 1 * --- | 1 | |
| A | GB 1 409 406 A (STORK AMSTERDAM) 8 octobre 1975 (1975-10-08) * le document en entier * --- | 1,3 | |
| A | US 4 567 978 A (HARTNESS THOMAS S) 4 février 1986 (1986-02-04) * figure 1 * --- | 1,3 | |
| A | US 3 171 239 A (R.F.KRUPP) 2 mars 1965 (1965-03-02) * figures 1,4,7 * --- | 1 | |
| A | US 5 341 916 A (KOHLS JAMES P  ET AL) 30 août 1994 (1994-08-30) * colonne 18, ligne 26 - colonne 20, ligne 19; figure 9 * --- | 1 | DOMAINES TECHNIQUES RECHERCHES (Int.Cl.7) B65G |
| A | EP 0 552 981 A (THIELE ENG CO) 28 juillet 1993 (1993-07-28) * page 2, ligne 44 - ligne 49; figure 2 * --- | 1 | |
| A | FR 2 433 375 A (HERMIER GONZAGUE) 14 mars 1980 (1980-03-14) * le document en entier * --- | 1 | |
| A | EP 0 837 016 A (GOLDCO INDUSTRIES) 22 avril 1998 (1998-04-22) ----- | | |

Le présent rapport a été établi pour toutes les revendications

| Lieu de la recherche | Date d'achèvement de la recherche | Examinateur |
| --- | --- | --- |
| LA HAYE | 18 octobre 2000 | Beernaert, J |

CATEGORIE DES DOCUMENTS CITES

X : particulièrement pertinent à lui seul
Y : particulièrement pertinent en combinaison avec un
   autre document de la même catégorie
A : arrière-plan technologique
O : divulgation non-écrite
P : document intercalaire

T : théorie ou principe à la base de l'invention
E : document de brevet antérieur, mais publié à la
   date de dépôt ou après cette date
D : cité dans la demande
L : cité pour d'autres raisons

& : membre de la même famille, document correspondant

EPO FORM 1503 03 82 (P04C02)

**ANNEXE AU RAPPORT DE RECHERCHE EUROPEENNE
RELATIF A LA DEMANDE DE BREVET EUROPEEN NO.**                EP 00 50 0091

La présente annexe indique les membres de la famille de brevets relatifs aux documents brevets cités dans le rapport de recherche européenne visé ci–dessus.
Lesdits members sont contenus au fichier informatique de l'Office européen des brevets à la date du
Les renseignements fournis sont donnés à titre indicatif et n'engagent pas la responsabilité de l'Office européen des brevets.

18-10-2000

| Document brevet cité au rapport de recherche | | Date de publication | Membre(s) de la famille de brevet(s) | | Date de publication |
|---|---|---|---|---|---|
| GB 1594810 | A | 05-08-1981 | NL | 7706925 A | 28-12-1978 |
| | | | BE | 868318 A | 21-12-1978 |
| | | | DE | 2826977 A | 11-01-1979 |
| | | | FR | 2395082 A | 19-01-1979 |
| | | | SE | 436863 B | 28-01-1985 |
| | | | SE | 7806492 A | 23-12-1978 |
| FR 2667851 | A | 17-04-1992 | FR | 2665424 A | 07-02-1992 |
| GB 1409406 | A | 08-10-1975 | NL | 7304205 A | 30-09-1974 |
| | | | BE | 812348 A | 16-09-1974 |
| | | | DE | 2411317 A | 17-10-1974 |
| | | | DK | 141062 B | 07-01-1980 |
| | | | ES | 424420 A | 16-06-1976 |
| | | | FI | 65599 B | 29-02-1984 |
| | | | FR | 2223276 A | 25-10-1974 |
| | | | SE | 410432 B | 15-10-1979 |
| US 4567978 | A | 04-02-1986 | AUCUN | | |
| US 3171239 | A | 02-03-1965 | AUCUN | | |
| US 5341916 | A | 30-08-1994 | US | 5267638 A | 07-12-1993 |
| | | | US | 5038911 A | 13-08-1991 |
| | | | AU | 652091 B | 11-08-1994 |
| | | | AU | 3287693 A | 25-03-1993 |
| | | | AU | 634205 B | 18-02-1993 |
| | | | AU | 4928190 A | 23-08-1990 |
| | | | CA | 1324588 A | 23-11-1993 |
| | | | DE | 69004589 D | 23-12-1993 |
| | | | DE | 69004589 T | 10-03-1994 |
| | | | EP | 0383615 A | 22-08-1990 |
| | | | JP | 2243411 A | 27-09-1990 |
| | | | AT | 146439 T | 15-01-1997 |
| | | | DE | 59207701 D | 30-01-1997 |
| | | | DK | 527542 T | 16-06-1997 |
| | | | EP | 0527542 A | 17-02-1993 |
| | | | ES | 2096022 T | 01-03-1997 |
| | | | JP | 5201522 A | 10-08-1993 |
| EP 0552981 | A | 28-07-1993 | JP | 5305914 A | 19-11-1993 |
| FR 2433375 | A | 14-03-1980 | AUCUN | | |
| EP 0837016 | A | 22-04-1998 | US | 5842818 A | 01-12-1998 |
| | | | AU | 721020 B | 22-06-2000 |

EPO FORM P0460

Pour tout renseignement concernant cette annexe : voir Journal Officiel de l'Office européen des brevets, No.12/82

ANNEXE AU RAPPORT DE RECHERCHE EUROPEENNE
RELATIF A LA DEMANDE DE BREVET EUROPEEN NO.

EP 00 50 0091

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

18-10-2000

| Document brevet cité au rapport de recherche | Date de publication | Membre(s) de la famille de brevet(s) | Date de publication |
|---|---|---|---|
| EP 0837016 A | | AU 4100397 A<br>CA 2217611 A | 23-04-1998<br>15-04-1998 |

EPO FORM P0460